# EUROPEAN PATENT SPECIFICATION

(11) **EP 1 356 613 B1**
(45) Date of publication and mention of the grant of the patent: **05.10.2005**
(21) Application number: 01911563.3
(22) Date of filing: 31.01.2001
(51) Int. Cl.: H04B 10/213, H04J 14/02

(54) **A METHOD AND SYSTEM FOR TRANSMISSION IN AN OPTICAL NETWORK**
VERFAHREN UND ANORDNUNG ZUR ÜBERTRAGUNG IN EINEM OPTISCHEN NETZWERK
PROCEDE ET SYSTEME POUR TRANSMISSION DANS UN RESEAU OPTIQUE

(43) Date of publication of application: 29.10.2003
(73) Proprietor: TELEFONAKTIEBOLAGET LM ERICSSON (publ), 164 83 Stockholm (SE)
(72) Inventor: ARBEUS, Carl-Johan, S-114 49 Stockholm (SE); ISAKSSON, Stig, Alex, S-144 64 Rönninge (SE)
(74) Representative: Lövgren, Tage
(86) International application number: PCT/EP2001/001036
(87) International publication number: WO 2002/061989

(56) References cited:
- EP-A- 0 475 016
- EP-A- 0 769 859
- WO-A-98/52306

## Description

### TECHNICAL FIELD

The present invention relates generally to a method and a system for transmission of light signals in an optical fibre network. More specifically, the invention relates to the minimisation of optical power losses in network connection nodes, having optical filtering.

### BACKGROUND OF THE INVENTION AND PRIOR ART

Optical transmission in fibres is more and more used today as an alternative to electrical transmission in metallic cables, in particular for digitally encoded signals. Optical transmission offers greater capacity by employing Wavelength Division Multiplexing WDM such that a channel used for communication is defined by a specific light wavelength. In this way, a plurality of channels may at the same time be assigned to and transmitted on one single fibre carrier since no interference occurs between the different active channel wavelengths. The signal is bandpass filtered at the receiving side such that only the assigned light wavelength is detected and processed/decoded.

Various different types of communication networks may be configured using optical transmission fibres, such as for data communication and/or telephony. The energy losses of the light during transmission are generally considered to be quite low in this medium. However, if the light is transmitted over long distances, optical amplification along the way or at the receiver may still be required if the light signals become too weak for proper detection. Optical amplification may be done by electro-optical regeneration of the signal, which is well-known in the art. In short distance optical telecommunication networks, e.g. so-called metro networks, it may not be necessary to employ optical amplification due to the relatively short travelling distances of the signals. A power budget can be calculated for the transmission of light signals throughout the network, taking into account the energy losses in the fibres and in intermediate nodes, in order to predict the received signal quality and need for optical amplification. It is desirable to reduce or eliminate the need for such amplification, which is quite expensive to employ, by minimising the energy losses. The power budget is a major limiting factor of the network performance.

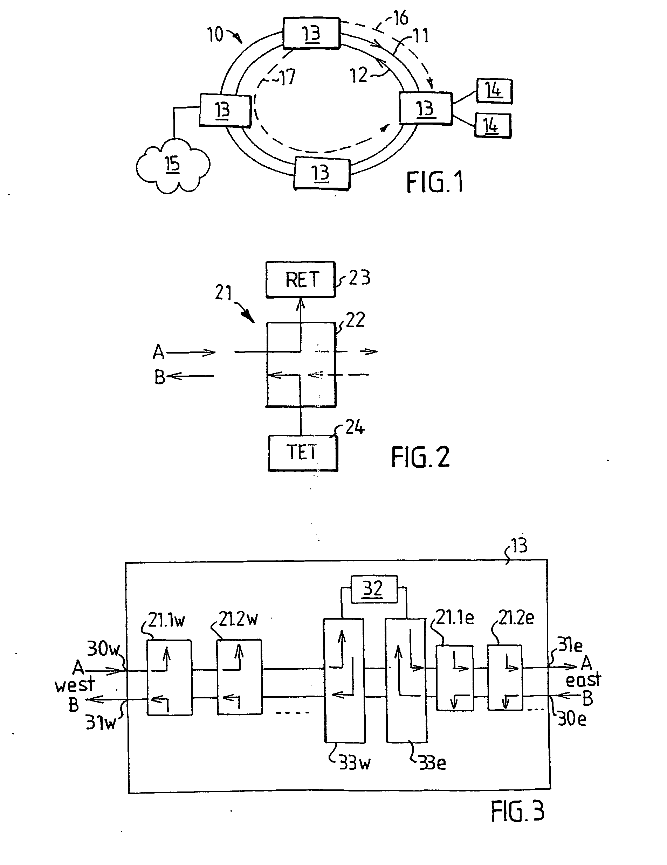

In Fig. 1 is shown a simplified example of a metro optical network 10 comprising optical fibres 11, 12 interconnecting a plurality of intermediate connection nodes 13, sometimes referred to as Optical Add-Drop Multiplexer-Metro network elements (OADM-M). The nodes 13 constitute points of connection with communicating parties 14 or other networks 15, of which only a few examples are shown. Each transmission link between two nodes 13 comprises at least two fibres 11 and 12, one for each direction of transmission, as will be explained below. The network 10 in this example is built as a bi-directional ring structure so that transmission from one point to another may go either clockwise or anti-clockwise, depending on, for example, which is the shortest route. Using this structure, it is possible to provide a so-called protection path as a back-up for each operating path. If an operating path 16 in one direction becomes inactivated for some reason, e.g. if the fibre is damaged, an ongoing communication on that path is switched over to a corresponding protection path 17 in the opposite direction which then becomes the operating path. The signals may be transmitted over the corresponding operating and protection paths simultaneously such that the receiver first detects signals from the operating path 16, and if no signals are detected from the operating path, starts to detect signals from the protecting path 17. In this way, the protection path is thus still able to provide connection to the receiving node, although maybe over a longer distance. There are other possible network structures which may use corresponding operating and protection paths. A connection may or may not be set up with such dual paths, e.g. depending on the availability of channels.

With reference to Fig. 2, each connection node 13 comprises at least one connection unit 21 for receiving, transmitting or routing signals. Each connection unit 21 is configured to drop or add signals of a specific light wavelength λ and comprises an optical add/drop filter unit 22, a Receive End Transponder RET 23 and a Transmit End Transponder TET 24. A main light flow, containing a plurality of wavelengths, may enter the connection unit 21 from two directions, such as clockwise and anti-clockwise running light flows in a ring structure. Any signal of the specific wavelength λ included in the main light flow from one direction A is dropped by a drop filter in the filter unit 22 and received by the RET 23. Further, a signal of the wavelength λ transmitted from the TET 24 is added by an add filter to the main light flow going in the other direction B. The RET 23 and the TET 24 are further connected to one or more end users or another communication network for further transmission, not shown. The connection unit 21 shown in Fig. 2 provides for communication to the left or west. Another corresponding connection unit is needed for communication to the right or east for signals of the same wavelength λ. Various available filtering techniques may be used in the filter unit 22, such as "thin film filtering", which attempts to minimise the energy losses of the total light signal when going through the filter unit. However, this invention is not concerned with any specific method of filtering. Since each node 13 of the optical network typically comprises several connection units 21 through which the light must pass, the energy losses may be substantial such that some kind of optical amplification may become necessary. It is estimated that the light energy loss induced by each filter unit is in the order of 0.5 - 0.8 dB.

At present, the need for transmission capacity in optical networks is increasing. As the technique for optical transmission and filtering becomes more refined, it is possible to add more channels, i.e., wavelengths, to the transmitted light in order to increase the bandwidth capacity of the networks. On the other hand, this will deteriorate the power budget due to an increased number of connection units, i.e., filter units through which the light must pass.

### SUMMARY

It is an object of the present invention to minimise the energy losses of light signals in intermediate network nodes in order to reduce or eliminate the need for light amplification. Another object of the invention is to facilitate modification of existing network nodes when adding more connection units for expanding the traffic capacity. These and other objects are achieved by providing a method and an apparatus for connection to an optical communication network according to the invention. Each point of connection to the network constitutes a connection node including a plurality of connection units, each operating to add and drop signals of at least one specific wavelength to and from main light flows by means of add/drop filter units. According to one aspect of the invention, the add/drop filter units in each connection node are arranged along the light paths such that the main light flow in both directions first pass through all drop filters and then through all add filters. In this way, the number of filters that each individual light wavelength must pass, and thereby the light energy loss, is minimised. The connection node, or multinode, comprises a main node and at least one extension node. According to the invention, the extension node(s) may easily be added to an existing main node. The add/drop filter units of both the main and extension nodes are then arranged in an intertwined manner along the main light flows such that the light always first pass through all drop filters and then through all add filters in the multinode.

### BRIEF DESCRIPTION OF THE DRAWINGS

The present invention will now be described in more detail and with reference to the accompanying drawings, in which:
- Fig. 1 is a schematic view of a simplified optical network.
- Fig. 2 is a block diagram of a connection unit providing a connection point for communicating parties or other networks.
- Fig. 3 is a block diagram of a connection node comprising a plurality of connection units.
- Fig. 4 is a block diagram of an expanded connection multinode, comprising a separate extension node added to an existing main node.
- Fig. 5 is a block diagram of an exemplary logical connection multinode configuration.
- Fig. 6 is a schematic view of an exemplary practical connection multinode configuration.

### DESCRIPTION OF PREFERRED EMBODIMENTS

Fig. 3 illustrates a connection node 13, wherein main light flows, containing a plurality of wavelength channels, run through the connection node 13 in two directions A and B in at least one fibre for each direction, such as clockwise and anti-clockwise running signals in a bi-directional ring network structure, see Fig.1. The connection node 13 includes a chain of plural connection units 21, interconnected in series by the fibres. A main light flow enters the connection node 13 in one direction A at a west input port 30w, runs through the connection units 21.1w, 21.2w... and 21.1e, 21.2e... one by one and exits the connection node 13 at an east output port 31e. Correspondingly, a main light flow in the other direction B enters the connection node 13 at an east input port 30e, runs through the connection units ...21.2e, 21.1e and ...21.2w, 21.1w one by one in the opposite order and exits the connection node 13 at a west output port 31w. In order to add or drop signals of a specific wavelength in both directions, two connection units are needed, one for each direction, as explained in connection with fig. 2.

The applicant has recognised the importance of minimising the number of connection units in the chain that the main light flow must pass through in order to optimise the power budget. Therefore, the node 13 is divided into a west part for communication towards one side and an east part for communication towards the other side. The connection units are arranged having their drop filters close to the input ports and with its add filters close to the output ports. Thus, all drop filters for direction A and add filters for direction B are placed in the west part of the node 13, and all drop filters for direction B and add filters for direction A are placed in the east part of the node 13. For example, a west connection unit 21.1w operates to drop signals of the wavelength λ₁ from the light flow in direction A and add signals of the wavelength λ₁ to the light flow in direction B, and an east connection unit 21.1e is configured to drop signals of the wavelength λ₁ from the light flow in direction B and add signals of the wavelength λ₁ to the light flow in direction A. In this way, a pair of corresponding connection units 21.1w, 21.1e operates to communicate the wavelength λ₁ when transmitted in the two directions A and B.

Still referring to Fig. 3, each connection node 13 further comprises a control unit 32 for receiving and transmitting supervisory signals on a specific control channel wavelength, sometimes referred to as an Optical Supervisory Channel OSC. This channel is used for management communication, e.g. supervising the transponders. In order to drop signals from and add signals to this channel in both directions A and B, west and east control connection units 33w, 33e are arranged in the middle of the node 13, separating the remaining west connection units 21.1w, 21.2w.- from the remaining east connection units 21.1e, 21.2e....

In practice, the equipment for a connection node 13 can be housed in two subracks mounted in one cabinet. The filter units are typically configured to each handle one specific wavelength channel, but it is possible to design filter units for plural wavelength channels.

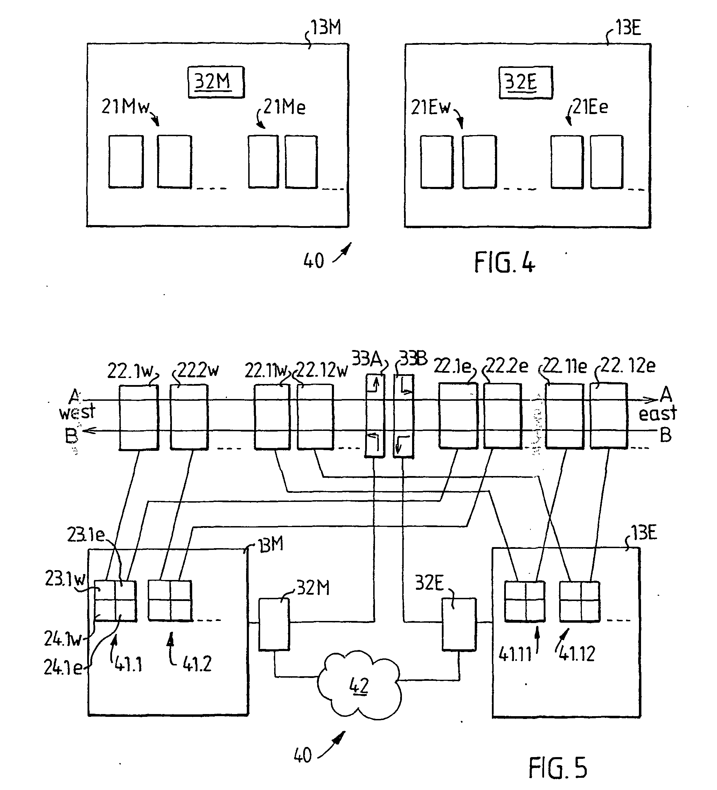

A typical connection node can have the capacity of adding and dropping up to 10 wavelength channels in each direction which can be utilised for 10 protected channels or 10 + 10 unprotected channels. It has been proposed to expand the capacity of such connection nodes up to 20 channels in each direction. In order to do this, more connection units 21 must be added to the already existing ones. Then, as illustrated in fig. 4, new west and east connection units 21Ew, 21Ee are arranged in a separate extension connection node 13E which is added to the existing main connection node 13M, together forming a new expanded connection multinode 40. The main connection node 13M includes plural west and east connection units 21Mw, 21Me. The main node 13M and the extension node 13E may be housed in separate cabinets. The nodes 13M, 13E include separate control units 32M, 32E for the supervision of the transponders in the respective connection units, the control units 32M, 32E operating independently of each other. The benefits of adding a complete separate extension node instead of integrating new and existing equipment into one single node is that no modifications of the main node are necessary, regarding both hardware construction, such as housing, and software programming of the control unit 32M. For example, it is not necessary to implement a master/slave relationship, requiring new software in the respective control units. Therefore, the time and effort for adding more capacity is substantially reduced.

However, if the extension node 13E is simply installed at the side of the main node 13M in the light transmission path, the power budget will not be optimal, since the light will first pass through the west and east parts of one node and then through the west and east parts of the other node. Although the main node and the extension node can logically be regarded as two separate connection nodes, advantage can be taken by the fact that the two nodes are installed close to each other at the same site. Thus, the add/drop filter units of both nodes are arranged in an intertwined manner along the light paths such that the light in both directions first pass through all drop filters and then through all add filters, thereby minimising the number of filters that each individual light wavelength must pass.

Fig. 5 illustrates a connection multinode 40 where the light paths in two directions A, B pass through a chain of filter units 22 belonging to a main connection node 13M and an extension connection node 13E. In this example, the main node 13M provides connections for a first set of channels λ₁ - λ₁₀ and the extension node 13E provides connections for a second set of channels λ₁₁ - λ₂₀. The main node 13M comprises west filter units 22.1w - 22.10w and east filter units 22.1e - 22.10e. The extension node 13E comprises west filter units 22.11w - 22.20w and east filter units 22.11e - 22.20e. All west filter units 22.1w - 22.20w are interconnected in an uninterupted sequence along the light paths on the "west side" and all east filter units 22.1e - 22.20e are interconnected in an uninterupted sequence along the light paths on the "east side", as indicated in the figure. Between the west and east sides of the light paths are connection units 33A, 33B placed for dropping/adding signals of the control channel for communication with control units 32M, 32E of the main and extension nodes. The control units 32M, 32E may communicate with each other via a separate network 42, e.g. an Ethernet network. The filter units 22.1w - 22.20w operate to drop signals of the respective channels λ₁ - λ₂₀ in the A direction, and operate to add signals of the respective channels λ₁ - λ₂₀ in the B direction. The filter units 22.1e - 22.20e operate to add signals of the respective channels λ₁ - λ₂₀ in the A direction, and operate to drop signals of the respective channels λ₁ - λ₂₀ in the B direction.

The main node 13M further comprises RETs 23.1w - 23.10w, 23.1e - 23.10e and TETs 24.1w - 24.10w, 24.1e - 24.10e, and the extension node 13E comprises RETs 23.11w - 23.20w, 23.11e - 23.20e and TETs 24.11w - 24.20w, 24.11e - 24.20e. The RETs and TETS are associated with filter units 22.1w - 22.20w, 22.1e - 22.1e, respectively, as indicated in fig. 5. For example, λ₁-signals dropped from direction A by the filter unit 22.1w are received by RET 23.1w and λ₁-signals transmitted from TET 24.1w are added by the filter unit 22.1w in direction B. Correspondingly, λ₁-signals dropped from direction B by filter unit 22.1e are received by RET 23.1e and λ₁-signals transmitted from TET 24.1e are added by the filter unit 22.1e in direction A.

In the example shown in Fig. 5, the RETs and TETs of both directions for each channel wavelength are logically grouped together as dual connection units, 41.1, 41.2... in the main node 13M and 41.11, 41.12... in the extension node 13E. It is preferable to physically arrange such dual units together if protected channels are used, as described above, with equal transmissions in both directions. For non-protected channels, this is not necessary and the RETs and TETs of the two directions for a channel wavelength may be placed independently of each other. In practice, various physical configurations are possible, such as grouping all west and east RET/TETs together in separate subracks in each node. However, it is important to arrange the associated filter units in the above described sequence in order to optimise the power budget.

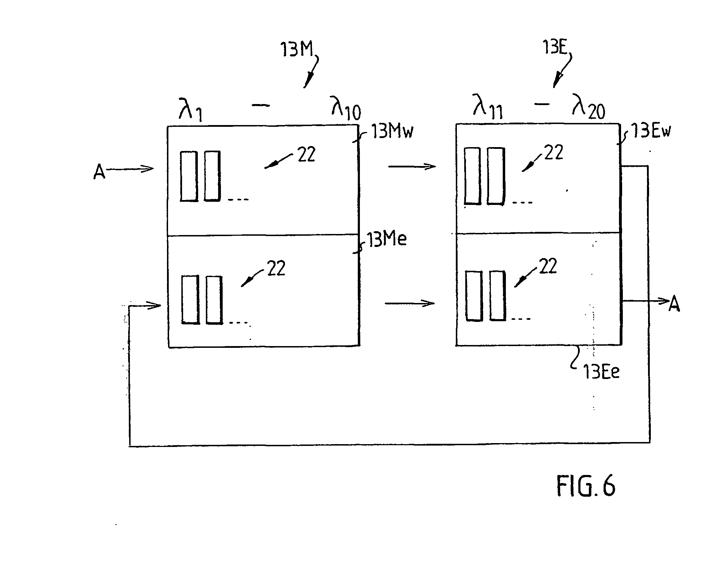

Fig. 6 illustrates how the filter units may be arranged, according to the invention, physically in a main cabinet 13M and an extension cabinet 13E, where each cabinet is divided into two subracks, such that the main cabinet comprises a west main subrack 13Mw and an east main subrack 13Me, and the extension cabinet comprises a west extension subrack 13Ew and an east extension subrack 13Ee. In this example, each subrack comprises 10 add/drop filter units 22 for adding/dropping signals of respective channels λ₁ - λ₂₀. The shown arrows represent a main light flow in one direction A. Thus, the light flow first runs through 10 filter units of the west main subrack 13Mw which operate to drop signals from channels λ₁ - λ₁₀, then through 10 filter units of the west extension subrack 13Ew which operate to drop signals from channels λ₁₁ - λ₂₀. Next, the light runs through two control channel filter units, not shown, for east and west communication respectively. These control channel filter units may be arranged in either of the main or extension subracks or in a separate subrack/housing. After passing through the control channel filter units, the signal runs through 10 filter units of the east main subrack 13Me which operate to add signals to channels λ₁ - λ₁₀, and finally through 10 filter units of the east extension subrack 13Ee which operate to add signals to channels λ₁₁ - λ₂₀. Alternatively, it is possible to let the light flow pass through the filters in any order within each subrack, e.g. in the opposite order from λ₂₀ through λ₁ in the east subracks 13Ee, 13Me. Various other different combinations are possible of arranging the filter units in the different cabinets and subracks and the described example should not be seen as limiting the scope of the invention. For example, any number of filters for both west and east communication together with the associated TETs/RETs may be located in one cabinet each for the main and extension nodes respectively, as indicated in Fig. 4.

The invention as described herein, provides for flexible configurations of connection nodes in optical networks, and in particular, a simple way of expanding connection capacity without requiring modifications to already existing equipment and resulting in minimised light energy losses.

According to further possible embodiments of the invention, a connection multinode may comprise more than one extension node in addition to the main node, in order to further extend the connection capacity. For example, one main node and three extension nodes can be configured in an intertwined manner similar to that described above.

While the invention has been described with reference to specific exemplary embodiments, the description is only intended to illustrate the inventive concept and should not be taken as limiting the scope of the invention, which is defined by the appended claims.

## Claims

1. A connection node for providing connection with an optical communication network (10), the connection node (13) comprising:
a plurality of connection units (21), each having an associated add/drop filter unit (22) including an add filter and a drop filter for adding and dropping signals of specific wavelength channels to and from light running through said add/drop filter units in two opposite light path directions (A, B),
**characterised in that** the connection node is a multinode comprising a main node (13M) and at least one added extension node (13E),
wherein the add/drop filter units (22) of the main and extension nodes (13M, 13E) are arranged in an intertwined manner along said light paths such that the light in each direction (A, B) first passes through all drop filters of the main node (13M) and of the extension node (13E), respectively, and then passes through all add filters of the main node (13M) and of the extension node (13E), respectively.

2. A connection node according to claim 1, **characterised in that** the connection units (21) are divided along said light paths into west connection units (21w) for communication towards one side of the connection node, and east connection units (21e) for communication towards the other side of the connection node, wherein signals of each wavelength channel is communicated by a west connection unit (21w) and by a corresponding east connection unit (21e) in both directions (A, B).

3. A connection node according to claim 2, **characterised in that** the connection node (13) further comprises a supervising control unit (32) and two associated connection units (33A, 33B) arranged between said west and east connection units in the light paths, for communicating signals of a control wavelength channel to and from the control unit (32).

4. A connection node according to any of claims 1 - 3, **characterised in that** each of the main and extension connection nodes (13M, 13E) comprises a plurality of west and east connection units (21w, 21e) including associated add/drop filter units (22w, 22e).

5. A connection node according to claim 1, **characterised in that** each of the main and extension connection nodes (13M, 13E) comprises a supervising control unit (32) and two associated connection units (33A, 33B).

6. A connection node according to any of claims 1 - 5, **characterised in that** the add/drop filter units (22) of the main node (13M) are arranged physically in a main cabinet, and the add/drop filter units (22) of the extension node (13E) are arranged physically in an extension cabinet.

7. A connection node according to claim 6, **characterised in that**, in the add/drop filter units (22), each add filter is connected to an associated Transmit End Transponder TET (24) and each drop filter is connected to an associated Receive End Transponder RET (23), wherein the associated RETs and TETs are also located in said main cabinet and extension cabinet, respectively.

8. A connection node according to claim 6 or 7, **characterised in that** said main cabinet is divided into a west main subrack (13Mw) and an east main subrack (13Me), and said extension cabinet is divided into a west extension subrack (13Ew) and an east extension subrack (13Ee).

9. A connection node according to any of claims 1 - 8, **characterised in that** the main node (13M) provides connections for a first set of wavelength channels (8₁ - 8₁₀) and the at least one extension node (13E) provides connections for at least a second set of wavelength channels (8₁₁ - 8₂₀).

10. A connection node according to any of claims 1 - 9, **characterised in that** each of the connection units (22) provides a connection to the optical network for a communicating party (14) or another communication network (15).

11. An optical communication network comprising a plurality of connection nodes, **characterised in that** said connection nodes include at least one connection node according to any of claims 1 - 10.

12. A method of connecting to an optical communication network comprising a connection node (13) including a plurality of connection units (21), each having an associated add/drop filter unit (22) including an add filter and a drop filter for adding and dropping signals of specific wavelengths to and from light running through said add/drop filter units in two opposite light path directions (A, B), **characterised by** the steps of:
- dropping signals from the light by means of drop filters in a main node (13M) and at least one added extension node (13E) before the light runs through said add filters in each direction, and
- adding signals to the light by means of add filters in said main node (13M) and said at least one added extension node (13E) after the light has run through said drop filters in each direction,
wherein said add/drop filter units (22) are arranged in an intertwined manner along the light paths such that the light in each direction (A, B) first passes through all drop filters of the main and extension nodes (13M, 13E), respectively, and then passes through all add filters of the main and extension nodes (13M, 13E), respectively.

13. A method according to claim 12, **characterised by** the further steps of:
- providing connections for a first set of wavelength channels (8₁ - 8₁₀) by the main node (13M), and
- providing added connections for at least a second set of wavelength channels (8₁₁ - 8₂₀) by the at least one added extension node (13E).

14. A method of expanding connection capacity in a connection node (13) of an optical communication network (10), said connection node comprising:
a plurality of connection units (21), each having an associated add/drop filter unit (22) including an add filter and a drop filter operating to add and drop signals of a first set of wavelength channels (8₁ - 8₁₀) to and from light running in two opposite light path directions (A, B), **characterised by** the step of:
- adding at least one extension node (13E), capable of adding and dropping signals of at least a second set of wavelength channels (8₁₁ - 8₂₀), to an existing main node (13M), and
- arranging the add/drop filter units (22) of the main and extension nodes (13M, 13E) in an intertwined manner along said light paths, such that light in each direction (A, B) first passes through all drop filters of the main node (13M) and of the extension node (13E), respectively, and then passes through all add filters of the main node (13M) and of the extension node (13E), respectively.

## Patentansprüche

1. Ein Verbindungsknoten zur Verfügungsstellung einer Verbindung mit einem optischen Kommunikationsnetzwerk (10), wobei der Verbindungsknoten enthält:
Eine Vielzahl von Verbindungseinheiten (21), jede eine assoziierte Add/Drop-Filtereinheit (22) besitzend, die einen Add-Filter und einen Drop-Filter zum Hinzufügen und Wegnehmen von Signalen einer speziellen Wellenlänge zum und vom Licht enthalten, das durch die Add/Drop-Filtereinheiten in zwei entgegen gesetzte Lichtpfadrichtungen läuft (A, B),
darin **gekennzeichnet**, dass der Verbindungsknoten ein Multiknoten ist, einen Hauptknoten (13M) und zumindest einen hinzugefügten Erweiterungsknoten (13E) besitzend,
worin die Add/Drop-Filtereinheiten (22) des Haupt- und der Erweiterungsknoten (13M, 13E) in einer verwobenen Weise entlang der Lichtpfade angeordnet sind, so dass das Licht in jede Richtung (A, B) zuerst durch alle Drop-Filter des Hauptknotens (13M) und des Erweiterungsknotens (13E) passiert, und dann durch alle Add-Filter des Hauptknotens (13M) und des Erweiterungsknotens (13E) passiert.

2. Ein Verbindungsknoten gemäß Anspruch 1, darin **gekennzeichnet**, dass die Verbindungseinheiten (21) entlang der Lichtpfade in westliche Verbindungseinheiten (21w) zur Kommunikation in die Richtung einer Seite des Verbindungsknotens aufgeteilt werden, und in östliche Verbindungseinheiten (21e) zur Kommunikation in die Richtung der anderen Seite des Verbindungsknotens, worin Signale jedes Wellenlängenkanals durch eine westlichen Verbindungseinheit (21w) und durch eine entsprechende östliche Verbindungseinheit (21e) in beide Richtungen (A, B) kommuniziert werden.

3. Ein Verbindungsknoten gemäß dem Anspruch 3, darin **gekennzeichnet**, dass der Verbindungsknoten (13) weiterhin eine Überwachungskontrolleinheit (32) und zwei assoziierte Verbindungseinheiten (33A, 33B) enthält, die zwischen den westlichen und östlichen Verbindungseinheiten in den Lichtpfaden zur Kommunikation von Signalen eines Kontrollwellenlängenkanals zu und von der Kontrolleinheit (32) angeordnet sind.

4. Ein Verbindungsknoten gemäß jedem der Ansprüche 1 - 3, darin **gekennzeichnet**, dass jeder der Haupt- und Erweiterungsknoten (13M, 13E) eine Vielzahl von westlichen und östlichen Verbindungseinheiten (21w, 21e) einschließlich assoziierter Add/Drop-Filtereinheiten (22w, 22e) enthält.

5. Ein Verbindungsknoten gemäß Anspruch 1, darin **gekennzeichnet**, dass jeder der Haupt- und Erweiterungsknoten (13M, 13E) eine Überwachungskontrolleinheit (32) und zwei assoziierte Verbindungseinheiten (33A, 33B) enthält.

6. Ein Verbindungsknoten gemäß jedem der Ansprüche 1 - 5, darin **gekennzeichnet**, dass die Add/Drop-Filtereinheiten (22) des Hauptknotens (13M) physikalisch in einem Hauptkabinett angeordnet sind, und die Add/Drop-Filtereinheiten (22) des Erweiterungsknotens (13E) physikalisch in einem Erweiterungskabinett angeordnet sind.

7. Ein Verbindungsknoten gemäß des Anspruchs 6, darin **gekennzeichnet**, dass in den Add/Drop-Filtereinheiten (22) jeder Add-Filter mit einem assoziierten Übertragungsende-Transponder TET (24) verbunden ist und jeder Drop-Filter mit einem assoziierten Empfangsende-Transponder RET (23) verbunden ist, worin die assoziierten RETs und TETs auch in dem Hauptkabinett und dem Erweiterungskabinett lokalisiert sind.

8. Ein Verbindungsknoten gemäß den Ansprüchen 6 oder 7, darin **gekennzeichnet**, dass das Hauptkabinett in einen westlichen Hauptuntereinschub (13M) und einen östlichen Hauptuntereinschub (13E) aufgeteilt ist, und dass das Erweiterungskabinett in einen westlichen Erweiterungsuntereinschub (13Ew) und einen östlichen Erweiterungsuntereinschub (13Ee) aufgeteilt ist.

9. Ein Verbindungsknoten gemäß jedem der Ansprüche 1 - 8, darin **gekennzeichnet**, dass der Hauptknoten (13M) Verbindungen für einen ersten Satz von Wellenlängenkanälen (8₁ - 8₁₀) liefert, und der zumindest eine Erweiterungsknoten (13E) Verbindungen für zumindest einen zweiten Satz von Wellenlängenkanälen (8₁₁ - 8₂₀) liefert.

10. Ein Verbindungsknoten gemäß jedem der Ansprüche 1 - 9, darin **gekennzeichnet**, dass jede der Verbindungseinheiten (22) eine Verbindung zu dem optischen Netzwerk für eine Kommunikationspartei (14) oder für ein anderes Kommunikationsnetzwerk liefert (15).

11. Ein optisches Kommunikationsnetzwerk, eine Vielzahl von Verbindungsknoten enthaltend, darin **gekennzeichnet**, dass die Verbindungsknoten zumindest einen Verbindungsknoten gemäß irgendeinem der Ansprüche 1 - 10 enthalten.

12. Ein Verfahren des Verbindens mit einem optischen Kommunikationsnetzwerk, einen Verbindungsknoten (13) mit einer Vielzahl von Verbindungseinheiten (21) enthaltend, wobei jeder einen assoziierten Add/Drop-Filter (22) mit einem Add-Filter und einem Drop-Filter zum Hinzufügen und Wegnehmen von Signalen mit spezifischen Wellenlängen zum und vom Licht weg besitzt, das durch die Add/Drop-Filtereinheiten in zwei entgegen gesetzte Lichtpfadrichtüngen (A, B) läuft, **gekennzeichnet durch** die Schritte:
Wegnehmen von Signalen aus dem Licht mit der Hilfe von Drop-Filtern in einem Hauptknoten (13M) und dem zumindest einem addierten Erweiterungsknoten (13E) bevor das Licht **durch** die Add-Filter in jede Richtung läuft, und
Hinzufügen von Signalen zum Licht mit der Hilfe von Add-Filtern in dem Hauptknoten (13M) und dem zumindest einen addierten Erweiterungsknoten (13E) nachdem das Licht **durch** die Drop-Filter in jede Richtung gelaufen ist,
worin die Add/Drop-Filtereinheiten (22) in einer verwobenen Weise entlang der Lichtpfade angeordnet sind, so dass das Licht in jede Richtung (A, B) zuerst **durch** alle Drop-Filter der Haupt- und Erweiterungsknoten (13M, 13E) passiert, und dann **durch** alle Add-Filter der Haupt- und Erweiterungsknoten (13M, 13E) passiert.

13. Ein Verfahren gemäß Anspruch 12, **gekennzeichnet durch** die weiteren Schritte:
Liefern von Verbindungen für einen ersten Satz von Wellenlängenkanälen (8₁ - 8₁₀) **durch** den Hauptknoten (13M), und
Liefern von addierten Verbindungen für zumindest einen zweiten Satz von Wellenlängenkanälen (8₁₁ - 8₂₀) **durch** zumindest einen addierten Erweiterungsknoten (13E).

14. Ein Verfahren des Erweiterns von Verbindungskapazität in einem Verbindungsknoten (13) eines optischen Netzwerks (10), wobei der Verbindungsknoten enthält:
eine Vielzahl von Verbindungseinheiten (21), jede mit einer assoziierten Add/Drop-Filtereinheit (22), einen Add-Filter und einen Drop-Filter enthaltend, die tätig sind, um Signale eines ersten Satzes von Wellenlängenkanälen (8₁ - 8₁₀) dem Licht hinzuzufügen und von ihm wegzunehmen, das in zwei entgegen gesetzte Lichtpfadrichtungen (A, B) läuft, **gekennzeichnet durch** die Schritte :
Hinzufügen von zumindest einem Erweiterungsknoten (13E), der in der Lage ist, Signale von zumindest einem Satz von Wellenlängenkanälen (8₁₁ - 8₂₀) einem vorhandenen Hauptknoten (13M) hinzuzufügen und von ihm wegzunehmen, und
Anordnen der Add/Drop-Filtereinheiten (22) der Haupt- und Erweiterungsknoten (13M, 13E) in einer verwobenen Weise entlang der Lichtpfade, so dass Licht in jede Richtung (A, B) zuerst **durch** alle Drop-Filter des Hauptknotens (13M) und des Erweiterungsknoten (13E) passiert, und dann **durch** alle Add-Filter des Hauptknotens (13M) und des Erweiterungsknotens (13E) passiert.

## Revendications

1. Noeud de connexion destiné à fournir une connexion avec un réseau de communication optique (10), le noeud de connexion (13) comprenant :
une pluralité d'unités de connexion (21), chacune ayant une unité de filtrage d'insertion et d'extraction associée (22) incluant un filtre d'insertion et un filtre d'extraction destinés à insérer et à extraire des signaux de canaux de longueur d'onde spécifique dans/de la lumière qui traverse lesdites unités de filtrage d'insertion et d'extraction dans deux directions opposées de trajets lumineux (A, B),
**caractérisé en ce que** le noeud de connexion est un multinoeud comprenant un noeud principal (13M) et au moins un noeud d'extension (13E) additionnel,
dans lequel les unités de filtrage d'insertion et d'extraction (22) des noeuds principaux et d'extension (13M, 13E) sont disposées de manière entrelacée sur lesdits trajets lumineux, de telle manière que la lumière circulant dans chacune des directions (A, B) traverse d'abord tous les filtres d'extraction du noeud principal (13M) et du noeud d'extension (13E), respectivement, puis traverse tous les filtres d'insertion du noeud principal (13M) et du noeud d'extension (13E), respectivement.

2. Noeud de connexion selon la revendication 1, **caractérisé en ce que** les unités de connexion (21) sont divisées tout au long desdits trajets lumineux en des unités de connexion occidentales (21w) destinées à la communication vers un des côtés du noeud de connexion et des unités de connexion orientales (21e) destinées à la communication vers l'autre côté du noeud de connexion, les signaux de chaque canal de longueur d'onde étant transmis par une unité de connexion occidentale (21w) et par une unité de connexion orientale (21e) correspondante dans les deux directions (A, B).

3. Noeud de connexion selon la revendication 2, **caractérisé en ce que** le noeud de connexion (13) comprend en outre une unité de commande de supervision (32) et deux unités de connexion associées (33A, 33B) disposées entre lesdites unités de connexion occidentale et orientale sur les trajets lumineux, afin de transmettre des signaux d'un canal de longueur d'onde de commande en provenance et à destination de l'unité de commande (32).

4. Noeud de connexion selon l'une quelconque des revendications 1 à 3, **caractérisé en ce que** chacun des noeuds de connexion principal et d'extension (13M, 13E) comprend une pluralité d'unités de connexion occidentales et orientales (21w, 21e) comprenant des unités de filtrage d'insertion et d'extraction associées (22w, 22e).

5. Noeud de connexion selon la revendication 1, **caractérisé en ce que** chacun des noeuds de connexion principal et d'extension (13M, 13E) comprend une unité de commande de supervision (32) et deux unités de connexion (33A, 33B) associées.

6. Noeud de connexion selon l'une quelconque des revendications 1 à 5, **caractérisé en ce que** les unités de filtrage d'insertion et d'extraction (22) du noeud principal (13M) sont disposées physiquement dans une armoire principale et les unités de filtrage d'insertion et d'extraction (22) du noeud d'extension (13E) sont disposées physiquement dans une armoire d'extension.

7. Noeud de connexion selon la revendication 6, **caractérisé en ce que**, dans les unités de filtrage d'insertion et d'extraction (22), chaque filtre d'insertion est connecté à un transpondeur d'extrémité d'émission TET (24) associé et chaque filtre d'extraction est connecté à un transpondeur d'extrémité de réception RET (23), les RET et les TET associés étant également implantés dans ladite armoire principale et dans ladite armoire d'extension, respectivement.

8. Noeud de connexion selon la revendication 6 ou 7, **caractérisé en ce que** ladite armoire principale est divisée en un sous-rack principal occidental (13Mw) et un sous-rack principal oriental (13Me) et ladite armoire d'extension est divisée en un sous-rack d'extension occidental (13Ew) et un sous-rack d'extension oriental (13Ee).

9. Noeud de connexion selon l'une quelconque des revendications 1 à 8, **caractérisé en ce que** le noeud principal (13M) fournit des connexions pour un premier ensemble de canaux de longueur d'onde (λ₁ à λ₁₀) et le au moins un noeud d'extension (13E) fournit des connexions pour au moins un second ensemble de canaux de longueur d'onde (λ₁₁ à λ₂₀).

10. Noeud de connexion selon l'une quelconque des revendications 1 à 9, **caractérisé en ce que** chacune des unités de connexion (22) fournit une connexion au réseau optique à une partie communicante (14) ou à un autre réseau de communication (15).

11. Réseau de communication optique comprenant une pluralité de noeuds de connexion, **caractérisé en ce que** lesdits noeuds de connexion comprennent au moins un noeud de connexion selon l'une quelconque des revendications 1 à 10.

12. Procédé de connexion à un réseau de communication optique comprenant un noeud de connexion (13) incluant une pluralité d'unités de connexion (21), chacune possédant une unité de filtrage d'insertion et d'extraction (22) associée incluant un filtre d'insertion et un filtre d'extraction, destinés à insérer et à extraire des signaux de longueurs d'ondes spécifiques dans/de la lumière traversant lesdites unités de filtrage d'insertion et d'extraction dans deux directions opposées de trajets lumineux (A, B), **caractérisé par** les étapes consistant à :
extraire des signaux de la lumière au moyen de filtres d'extraction dans un noeud principal (13M) et au moins un noeud d'extension (13E) additionnel avant que la lumière traverse lesdits filtres d'insertion dans chacune des directions, et
insérer des signaux dans la lumière au moyen de filtres d'insertion dans ledit noeud principal (13M) et ledit au moins un noeud d'extension (13E) additionnel après que la lumière a traversé lesdits filtres d'extraction dans chacune des directions,
dans lequel lesdites unités de filtrage d'insertion et d'extraction (22) sont disposées de manière entrelacée le long des trajets lumineux de manière à ce que la lumière, dans chaque direction (A, B), traverse d'abord tous les filtres d'extraction des noeuds principal et d'extension (13M, 13E), respectivement, puis traverse tous les filtres d'insertion des noeuds principal et d'extension (13M, 13E), respectivement.

13. Procédé selon la revendication 12, **caractérisé par** les étapes supplémentaires consistant à :
fournir des connexions pour un premier ensemble de canaux de longueur d'onde (λ₁ à λ₁₀) à l'aide du noeud principal (13M), et
fournir des connexions additionnelles pour au moins un second ensemble de canaux de longueur d'onde (λ₁₁ à λ₂₀) à l'aide d'au moins un noeud d'extension (13E) additionnel.

14. Procédé d'extension de la capacité de connexion dans un noeud de connexion (13) d'un réseau de communication optique (10), ledit noeud de connexion comprenant :
une pluralité d'unités de connexion (21), chacune ayant une unité de filtrage d'insertion et d'extraction associée (22) incluant un filtre d'insertion et un filtre d'extraction destinés à insérer et à extraire des signaux d'un premier ensemble de canaux de longueur d'onde (λ₁ à λ₁₀) dans/de la lumière dans deux directions opposées de trajets lumineux (A, B),
**caractérisé par** l'étape consistant à :
ajouter à un noeud principal préexistant (13M) au moins un noeud d'extension (13E), capable d'insérer et d'extraire des signaux d'au moins un second ensemble de canaux de longueur d'onde (λ₁₁ à λ₂₀), et
disposer les unités de filtrage d'insertion et d'extraction (22) des noeuds principal et d'extension (13M, 13E) d'une manière entrelacée le long des trajets lumineux, de manière à ce que la lumière, dans chaque direction (A, B), traverse d'abord tous les filtres d'extraction du noeud principal (13M) et du noeud d'extension (13E), respectivement, puis traverse tous les filtres d'insertion du noeud principal (13M) et du noeud d'extension (13E), respectivement.
